# EUROPEAN PATENT SPECIFICATION

(11) **EP 3 354 959 B1**
(45) Date of publication and mention of the grant of the patent: **06.11.2019**
(21) Application number: 17153921.6
(22) Date of filing: 31.01.2017
(51) Int. Cl.: F16L 59/065, F16L 59/14

(54) **IMPROVED PIPE INSULATION**
VERBESSERTE ROHRISOLIERUNG
ISOLATION DE TUYAU AMÉLIORÉE

(43) Date of publication of application: 01.08.2018
(73) Proprietor: Powerpipe Systems AB, 425 02 Hisings Kärra (SE)
(72) Inventor: JOHANSSON, Göran, 472 92 STILLINGSÖN (SE)
(74) Representative: AWA Sweden AB

(56) References cited:
- WO-A1-02/02987
- WO-A1-03/006871
- US-A1- 2016 003 397

## Description

### Field of the Invention

The present invention relates to an improved insulated pipe and an improved method for insulating district heating pipes.

### Background

Yearly statistics on Swedish energy usage show that approximately 10% of the energy produced for district heating is lost from the distribution system. According to some, this number could be even higher for areas with a sparse energy outtake. Investigations have shown that in sparse areas, the energy loss from the district heating distribution system may be as much as 40 %. In some cases, this energy loss is even higher.

One way of decreasing energy losses is to use new and improved types of insulation, such as new and improved types of polyurethane foam. Such new and improved polyurethane foam might for example have a smaller average cell size, thus improving the insulation capacity of the foam, have an alternative and more effective insulation gas, or may have a lower than ordinary density, also increasing the insulation capacity of the foam. When altering the characteristics of the polyurethane foam, standardized requirements on compressive strength, adhesion, water absorption capacity, etc. etc. must be considered.

Further approaches for insulating pipes includes the usage of a vacuum insulation panel in the pipe, as disclosed by e.g. WO0202987 and WO03006871, or the usage of a porous material with a layered envelope such as that described in US2016003397.

Some other suggestions as how to reduce the heat loss from district heating pipes are as follows:
- To use twin pipes instead of two single pipes, where the supply pipe and the return pipe are placed within the same insulation pipe.
- To shift the symmetry of the twin pipe so that the warmer supply pipe gets more insulated:
   ○ by different sizes on the supply and return pipe.
   ○ by shifting the position of the supply and return pipes so that the supply pipe is closer to the center.
   ○ by using an egg shaped casing with thicker insulation around the supply pipe.
- To put more than two pipes within the same insulation where some can be turned off when the energy outtake is low.
- To add some superior type of insulation close to the supply pipe.

The use of twin pipes is already common practice in Sweden, when applicable. The shift of the supply pipe towards the center of the surrounding pipe has been investigated, and this investigation shows a reduction of energy loss by up to 3.2 %. Furthermore, the use of egg shaped casing pipes has been investigated and this investigation shows a potential energy loss reduction of 7 % compared to twin pipes. There is always a need to find new and improved ways of decreasing these types of energy losses.

### Summary of the Invention

An object of the present invention is therefore to alleviate the abovementioned problems and provide an insulated pipe arranged to decrease energy losses due to thermal conductivity of the insulation material.

The above and other objects which will be evident from the following description are achieved by an insulated pipe according to the first aspect of the present invention and a method for insulating a pipe according to the second aspect of the present invention.

According to a first aspect of the present invention, an insulated pipe is provided, comprising an encasement pipe and a first inner pipe arranged inside said encasement pipe, at least one vacuum insulation panel comprising a porous core material and a multi-layer envelope encasing said porous core material, wherein said multi-layer envelope comprises at least one layer comprising a metal material, wherein said at least one vacuum insulation panel is arranged around the circumference of said first inner pipe, wherein said at least one vacuum insulation panel comprises an inward-facing side facing towards a longitudinal axis of said first inner pipe, an outward-facing side facing the opposite direction, and four side faces arranged between said inward-facing side and said outward-facing side, and said insulated pipe further comprising a polymer foam filling the space between said vacuum insulation panel and said encasement pipe, wherein at least at the portion of said multi-layer envelope located at said four side faces any layer comprising a metal material is at least one metallized polymer layer.

The insulated pipe may for example be used in district heating applications or hot water supply applications. The insulated pipe may additionally or alternatively be used to transport other medium than water, such as gas, steam, or oil.

The vacuum insulation panel may have a cuboid shape having a thickness that is significantly smaller than its width and length, i.e. be shaped as a panel. This panel may then be wrapped around a pipe that is to be insulated. The side faces of the vacuum insulation panel are then the faces extending in the direction having a significantly smaller dimension than the others. The inward-facing side and the outward-facing side are then the faces extending in a length-wise and width-wise direction. Alternatively, the vacuum insulation panel may have another shape than a cuboid shape. In that case, the side faces are the faces of the vacuum insulation panel having the smallest dimension, i.e. the thickness of the panel. For example, the vacuum insulation panel may be shaped as a triangular prism having an axial dimension that is significantly smaller than any of its three side dimensions. In this case, the side faces are the faces that extend in the axial direction of the triangular prism.

The multi-layer envelope may be referred to as a cover material having a sandwich structure. It should be understood that the multi-layer envelope or cover material may have several layers of different materials, wherein each layer has an individual thickness. The number of layers in the multi-layer envelope may also vary, from a single layer to a large number of layers, e.g. ten layers. Thus, an improved vacuum insulation panel may be achieved, which in turn may lead to an improved insulated pipe being provided. Also, the relative order of the layers and their thickness may also vary, depending on the needs of the application. It should also be understood that the multi-layer envelope may comprise two or more portions, e.g. a top half and a bottom half or three thirds that are welded together around the circumference of the core material. Alternatively, the multi-layer envelope may be a single multi-layer sandwich structure that is folded around the core material, thus only requiring welding along part of the circumference of the core material, such as along three out of four edges of the vacuum insulation panel.

By providing the first inner pipe with a combination of polymer foam insulation and at least one vacuum insulation panel, a more efficient thermal insulation may be achieved. By arranging the vacuum insulation panel closest to the inner pipe and the polymer foam closest to the encasement pipe, a more cost effective insulation is achieved. This is due to the fact that the insulation material provided close to the pipe is more material efficient than the insulation material provided close to the encasement pipe. This is explained by the fact that the thermal insulation effectiveness of pipe insulation is largely a function of thermal conductivity of the insulating material and the thickness of the material. As it requires less material to achieve a given thickness of insulation material close to the pipe than it does at larger radial distance from the pipe, the more effective insulation material of two given insulation materials should be arranged closest to the pipe that is to be insulated. By having a more effective insulation material, the total thickness of the insulation may be decreased without decreasing total insulation capacity of the insulation. Thus, an encasement pipe having a smaller diameter may be used to hold the first inner pipe. One benefit of having a smaller diameter encasement pipe is that the excavation volume may be decreased, thus enabling a faster, cheaper, and more simple way of laying insulated pipes. The personnel laying the pipes may then navigate more easily between wells and other pipes in the ground, as well as buildings that are in the way.

That at least at the portion of said multi-layer envelope located at said four side faces any layer comprising a metal material is at least one metallized polymer layer is to be understood as meaning that the part of the multi-layer envelope covering the side faces of the vacuum insulation panel are made of no other layers than metallized polymer layers and polymer layers. In other words, at the side faces, the only layers of the multi-layer envelope that comprises a metal material are the at least one metallized polymer layer. In other words, the part of the multi-layer envelope that is located adjacent to and/or is substantially parallel with the side faces of the vacuum insulation panel only comprises polymer layers and/or metallized polymer layers.

As at least a portion of the multi-layer envelope of the vacuum insulation panel comprises no other layer comprising metal material than at least one metallized polymer layer, it is possible to have the multi-layer envelope arranged so as to decrease the thermal bridges that normally occur at the regions where two vacuum insulation panels or two ends of one vacuum insulation panel meet or overlap. This is due to the fact that the insulating ability of a vacuum insulation panel at a region where two vacuum insulation panels or two ends of one vacuum insulation panel meet is determined largely by the thermal conductivity of the envelope material. Thus, having the envelope at this region consist of at least one layer of metallized polymer and at least one polymer layer, as opposed to comprising a metal foil, may decrease the thermal conductivity of the envelope and a less significant thermal bridge may therefore be achieved. Thermal bridges are areas of the vacuum insulation panel which have significantly higher thermal conductivity than the rest of the vacuum insulation panel. Examples of such areas are the end portions, i.e. the side faces, of the vacuum insulation panels, as these portion have a higher ratio of thermally conducting envelope material to core material. As metal foil layers of a multi-layer envelope, such as a layer of aluminum foil, tend to have significantly higher thermal conductivity than polymer or metallized polymer layers, it is beneficial to only have a polymer layer or a metallized polymer layer, or a combination of the two, covering the regions of a vacuum insulation panel where a thermal bridge otherwise might occur. This is due to the fact that the metal thickness of a metallized polymer layer may be lower than the thickness of the metal foil used in commonly known vacuum insulation panels.

The encasement pipe may additionally or alternatively be referred to as a cover pipe or jacket pipe, and is to be understood as being the pipe that covers the pipe or pipes intended for fluid transport. The encasement pipe is also meant to keep the insulation material in place in relation to the inner pipe.

By having the space between the vacuum insulation panels and the encasement pipe filled with a polymer foam, the service life at a given temperature of the at least one vacuum insulation panel is increased. If the vacuum insulation panel were to be used in an environment of air, some of that air might permeate into the vacuum insulation panels through the pores of its multi-layer envelope. Thus, the insulation efficiency of the vacuum insulation panel would be decreased. The rate of permeation would increase as the temperature of the vacuum insulation panel increases. In addition to air, water would permeate therethrough, further decreasing the insulation efficiency of the vacuum insulation panel. By having an environment of polymer foam instead of an environment of air, the rate of permeation is decreased, both at normal temperatures and at elevated temperatures, and the service life of the vacuum insulation panel is consequently increased at a given temperature.

The first inner pipe could e.g. be a supply pipe in a twin pipe district heating pipe or a supply pipe in a water pipe.

According to one exemplary embodiment, at least at the portion of the multi-layer envelope located at a portion of said at least one vacuum insulation panel that is in contact with one end of another vacuum insulation panel or with the other end of said at least one vacuum insulation panel, any layer comprising a metal material is at least one metallized polymer layer.

According to one exemplary embodiment, the insulated pipe comprises one vacuum insulation panel arranged around the entire circumference of the first inner pipe.

According to one exemplary embodiment, the insulated pipe comprises two vacuum insulation panels provided so that they are collectively arranged around the circumference of the first inner pipe, e.g. one vacuum insulation panel covers half of the circumference of the first inner pipe and the other vacuum insulation panel covers the other half. The insulated pipe may alternatively comprise three or more vacuum insulation panels. The vacuum insulation panels may also be arranged next to each other along a longitudinal axis of the pipe that is to be insulated, i.e. the insulated pipe may comprise four vacuum insulation panels, wherein each pair of these being arranged around a circumference of the first inner pipe and each pair being arranged sequentially one after the other in a longitudinal direction of the first inner pipe.

According to one exemplary embodiment, said multi-layer envelope encases said porous core material in a vacuum tight manner.

According to one exemplary embodiment, said porous core material is a vacuumized porous core material. This is to be understood as meaning that the air has been sucked out of the material to the greatest possible degree using conventional means such as air pumps. Thus, the vacuumized porous core material has a decreased thermal conductivity compared to porous core material not having been vacuumized.

According to one exemplary embodiment, said at least one metallized polymer layer is at least one aluminized polymer layer.

According to one exemplary embodiment, said multi-layer envelope comprises at least one layer comprising a polymer material.

According to one exemplary embodiment of the first aspect of the present invention, said at least one metallized polymer layer has a thickness of less than 2000 nm, or preferably less than 1500 nm, or most preferably smaller than 1000 nm, and/or greater than 10 nm, and/or preferably greater than 20 nm.

Thus, the thermal bridges at the end portions of the at least one vacuum insulation panel may be decreased as the material thickness is decreased. This is due to the fact that thermal conductivity at the end portions of the vacuum insulation panel is related to the type of material used in the envelope and the area through which heat is to be conducted.

According to one exemplary embodiment of the first aspect of the present invention, said polymer foam is a polyurethane foam.

By having the space between the vacuum insulation panels and the encasement pipe filled with polyurethane foam, the service life of the at least one vacuum insulation panel at a given temperature is increased compared to a vacuum insulation panel residing in an environment of air, as polyurethane foam have been shown to provide a low permeation of fluid into the at least one vacuum insulation panel.

According to one exemplary embodiment of the first aspect of the present invention, any layer of the multi-layer envelope comprising a polymer material is a layer comprising a thermoplastic polymer material.

Thus, two ends of the multi-layer envelope may be welded together, thereby sealing the porous core material from the environment surrounding it.

According to one exemplary embodiment, the multi-layer envelope is sealed around the core material by means of ultrasonic welding.

According to one exemplary embodiment, the multi-layer envelope is sealed around the core material by means of ultrasonic welding of at least one layer comprising a thermoplastic polymer.

By welding the multi-layer envelope shut using ultrasonic welding, a number of benefits are achieved. For example, ultrasonic welding is a process that is easy to automatize. Also, ultrasonic welding is a quick process, it requires little energy compared to other types of welding, and little combustion gas is created during the welding.

According to one exemplary embodiment, the multi-layer envelope is sealed around the core material by means of adhesion.

According to one exemplary embodiment of the first aspect of the present invention, said thermoplastic polymer material is a Nylon material.

According to one exemplary embodiment of the first aspect of the present invention, said at least one metallized polymer layer is made of a material belonging to a group comprising: metallized ethylene vinyl alcohol, metallized PET, metallized polypropylene, metallized nylon, and metallized polyethylene.

The metallization of the materials in the abovementioned group may be aluminization. In other words, the abovementioned group may further comprise aluminized ethylene vinyl alcohol, aluminized PET, aluminized polypropylene, aluminized nylon, and aluminized polyethylene. Metallization is to be understood as being the process of applying a thin layer of metal to a polymer film. This metal layer may be significantly thinner than what is possible when using metal foils, due to limitations in the production method of metal foils.

According to one exemplary embodiment of the first aspect of the present invention, said at least one vacuum insulation panel is arranged around the circumference of said first inner pipe so that two ends of said at least one vacuum insulation panel overlap.

By arranging the vacuum insulation panel in an overlapping manner around the circumference of the first inner pipe, the thermal insulation of the first inner pipe may be increased. Specifically, the so-called thermal bridges are decreased by having ends of one or more vacuum insulation panels overlap.

According to one exemplary embodiment of the first aspect of the present invention, said polymer foam is adhered to said encasement pipe.

In other words, the polymer foam is attached to the inner walls of the encasement pipe. This attachment could for example be due to the preparation of the inner surface of the encasement pipe by means of corona treatment of the inner surface, the application of an adhesive to the inner surface, or it could be due to the inherent adhesiveness of the polymer foam, or any combination of the three.

According to one exemplary embodiment of the first aspect of the present invention, the insulated pipe further comprises a second inner pipe arranged inside said encasement pipe.

It should be understood that the second inner pipe may be a return pipe in a district heating system, and the first inner pipe may be a supply pipe in said district heating system. In other words, insulating the supply pipe may be preferable to insulating the return pipe. As the second inner pipe may be provided with no or little additional insulation apart from the polymer foam, the polymer foam may adhere directly to this second inner pipe. For regulatory reasons, it is beneficial if the two inner pipes can be fixed in relation to the encasement pipe. The two inner pipes may be rigidly connected to each other by connecting means arranged at intervals in a longitudinal direction of the inner pipes. Thus, the first inner pipe may be fixed in relation to the encasement pipe by fixing the second inner pipe in relation thereto, for example by means of adhering the second inner pipe to the polymer foam that, in turn, is adhered to the encasement pipe. This reduces the risk of damaging the vacuum insulation panel on the first inner pipe due to longitudinal heat-driven expansion of the inner pipes, as the vacuum insulation panels need not be adhered to the first inner pipe. In other words, the vacuum insulation panels may be slidably arranged around the circumference of the first inner pipe.

According to one exemplary embodiment of the first aspect of the present invention, said polymer foam is adhered to said second inner pipe.

In this example embodiment, the polymer foam attaches to the outer walls of the second inner pipe and alternatively also to the inner walls of the encasement pipe. The second inner pipe is in this exemplary embodiment not provided with a vacuum insulation panel. However, it is possible to provide parts of or the entirety of the second inner pipe with additional insulation such as vacuum insulation panels and adhere the polymer foam to the parts of the second inner pipe that is not provided with said insulation.

According to one exemplary embodiment of the first aspect of the present invention, said at least one vacuum insulation panel does not overlap at the circumferential position on said first inner pipe which is located closest to said second inner pipe.

Thus, the heat loss due to a thermal bridge at the position where the at least one vacuum insulation panels overlap may be decreased as the overlap may be directed towards a portion of the insulated pipe that is provided with more of the insulating polymer foam than is present between the first inner pipe and the second inner pipe.

According to a second aspect of the present invention, a method for insulating district heating pipes is provided, said method comprising the steps of:
- providing an encasement pipe and a first inner pipe arranged inside said encasement pipe,
- providing at least one vacuum insulation panel comprising a porous core material and a multi-layer envelope encasing said porous core material, wherein said at least one vacuum insulation panel comprises an inward-facing side arranged to face towards a longitudinal axis of said first inner pipe, an outward-facing side arranged to face the opposite direction, and four side faces arranged between said inward-facing side and said outward-facing side, wherein at least at the portion of said multi-layer envelope located at said four side faces any layer comprising a metal material is at least one metallized polymer layer,
- arranging said at least one vacuum insulation panel around the circumference of said first inner pipe,
- filling a space between said vacuum insulation panel and said encasement pipe with a polymer foam.

According to one exemplary embodiment of the second aspect of the present invention, said at least one vacuum insulation panel is arranged around the circumference of said first inner pipe so that two ends of said at least one vacuum insulation panel overlap.

According to one exemplary embodiment of the second aspect of the present invention, said method further comprises the steps of:
- providing a second inner pipe arranged inside said encasement pipe, and
- adhering said polymer foam to said second inner pipe.

According to one exemplary embodiment of the second aspect of the present invention, said method further comprises the step of:
- sealing said multi-layer envelope around said porous core material by means of ultrasonic welding.

The insulated pipe according to the first aspect of the present invention may be used in the method according to the second aspect of the present invention. Any of the features of the different embodiments of the first aspect of the present invention are thus applicable to the second aspect of the present invention, mutatis mutandis.

### Brief description of the drawings

The above, as well as additional objects, features and advantages of the present invention, will be better understood through the following illustrative and non-limiting detailed description of exemplary embodiments of the present invention, with reference to the appended drawing, wherein:
Figure 1 is a cross-sectional view of a vacuum insulation belonging to the prior art, wherein two ends of the vacuum insulation panel overlap,
Figure 2 is a cross-sectional view of a vacuum insulation belonging to the prior art, wherein two side faces of the vacuum insulation panel are in contact with each other and there is no overlap between the two ends of the vacuum insulation panel,
Figure 3A is a perspective view of an insulated pipe according to one exemplary embodiment of the present invention,
Figure 3B is a perspective view of an insulated pipe according to one exemplary embodiment of the present invention,
Figure 4 is a cross-sectional view of a portion of an insulated pipe according to one exemplary embodiment of the present invention,
Figures 5A - 5C are cross-sectional views of vacuum insulation panels used in insulated pipes according to a respective exemplary embodiment of the present invention.
Figure 6 is a cross-sectional view showing a portion of the multi-layer envelope that comprises a welded seam.

### Detailed description of the drawings

In the present detailed description, embodiments of an insulated pipe according to the present invention are mainly discussed with reference to drawings showing an insulated pipe and/or a vacuum insulation panel with components and portions being relevant in relation to various embodiments of the invention. It should be noted that this by no means limits the scope of the invention, which is also applicable in other circumstances for instance with other types or variants of insulated pipes and/or vacuum insulation panels than the embodiments shown in the appended drawings. Further, that specific features are mentioned in connection to an embodiment of the invention does not mean that those components cannot be used to an advantage together with other embodiments of the invention.

The invention will now by way of example be described in more detail by means of embodiments and with reference to the accompanying drawings.

As each one of the different layers of the multi-layer envelope may have different individual thicknesses depending on what requirements are put on the vacuum insulation panel and its envelope, the layers shown in the figures described below are only a schematic representation of the layers used in the actual panels.

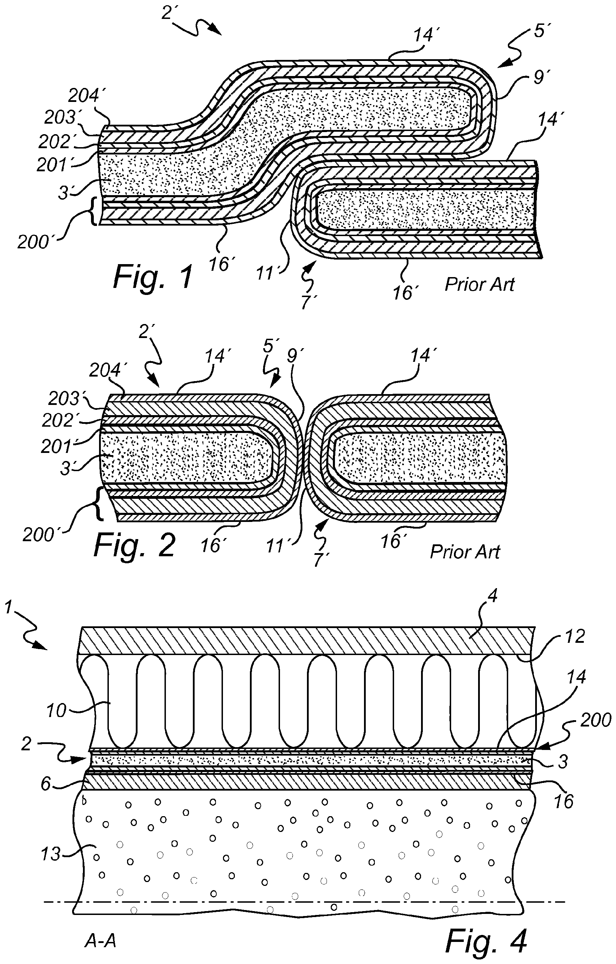

Figure 1 is a cross-sectional view of a vacuum insulation panel (VIP) 2' belonging to the prior art. The VIP 2' has an outward-facing side 14' and an inward-facing side 16', and comprises a porous core material 3' and a multi-layer envelope 200' encasing said porous core material 3' in a vacuum tight manner. The multi-layer envelope 200' is sealed around the porous core material 3' by means of a welded seam (not shown) and the porous core material 3' has been vacuumized. The multi-layer envelope 200' consists of four layers of material 201', 202', 203', 204' arranged in a sandwich structure. The innermost layer 201' is a polymer layer, the second layer 202' is an aluminized polymer layer, the third layer 203' is an aluminum foil, and the fourth layer 204' is a polymer layer. The layers are adhered to each other using a respective layer of adhesive (not shown). The thickness of the aluminum foil layer 203' is about 5 µm and the thickness of each one of the other layers 201', 202', 204' is about 1 µm. The VIP 2' is arranged so that its two ends 5', 7' overlap. At the two ends 5', 7', the VIP 2' has a respective side face 9', 11'. As the thermal conductivity of the vacuumized porous core material 3' is very low, heat on one side of the VIP 2' is primarily transferred to the other side of the VIP 2' by means of thermal conduction through the aluminum foil layer 203' at the overlap and at the side faces 9', 11'.

Figure 2 is a cross-sectional view of a VIP 2' belonging to the prior art. Instead of having the two ends 5', 7' of the VIP 2' overlap, the VIP 2' is arranged so that its two side faces 9', 11' are in contact with each other. Thus, there is no overlap between the two ends 5', 7' of the VIP 2'. With regards to the multi-layer envelope 200' and the vacuumized porous core material 3', the VIP 2' of Figure 2 shares the features of the VIP 2' of Figure 1. Consequently, heat on one side of the VIP 2' is primarily transferred to the other side of the VIP 2' by means of thermal conduction through the aluminum foil layer 203' at the side faces 9', 11'.

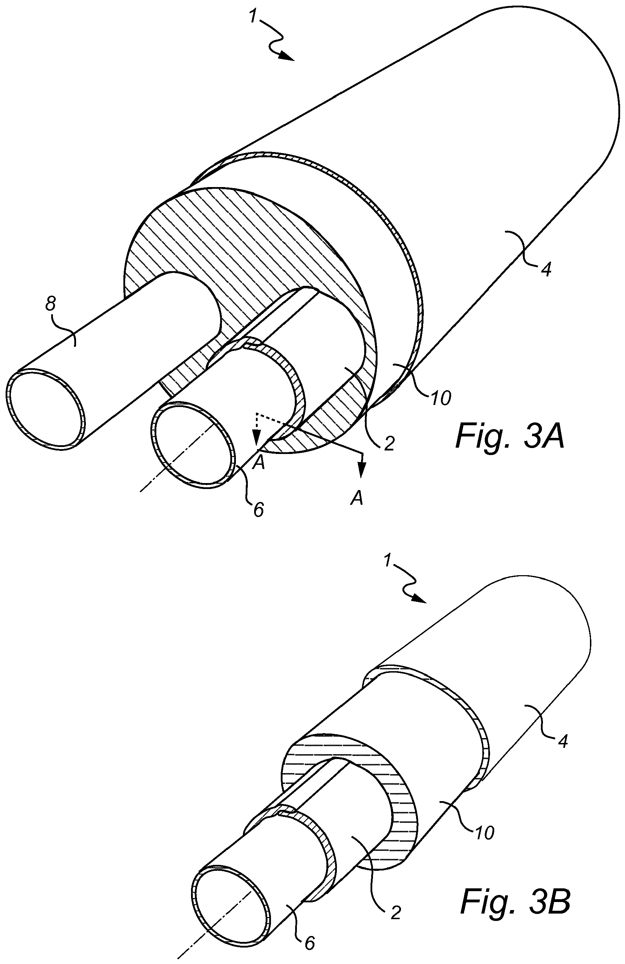

Figure 3A is a perspective view of an insulated pipe 1 according to an exemplary embodiment of the present invention. The insulated pipe 1 comprises an encasement pipe 4 as well as a first inner pipe 6 and a second inner pipe 8, both arranged inside the encasement pipe 4. The first pipe 6 is rigidly connected to the second inner pipe 8 by connection means (not shown). Thus, no relative movement of the two inner pipes 6, 8 is possible. The encasement pipe 4 is arranged to protect the first and second inner pipes 6, 8, as well as the insulation, from the external environment, e.g. from water and moisture, as well as from surrounding materials such as dirt, clay and/or sand. The first inner pipe 6 may for example be a supply pipe in a district heating system and the second inner pipe 8 may for example be a return pipe. The insulated pipe 1 further comprises a VIP 2 comprising a vacuumized porous core material (3, shown in Figure 4) and a multi-layer envelope (200, shown in Figure 4) encasing said porous core material 3. The VIP 2 is arranged around the circumference of the first inner pipe 6, and the two ends of the VIP 2 overlap. Between the VIP 2 and the encasement pipe 4, a polyurethane foam 10 is provided. The overlap of the two ends of the VIP 2 is located at a position such that there is an increased amount of polyurethane foam 10 located outside the overlap. This decreases heat losses from the overlap due to an increased amount of insulation being present. In this case, this means that the overlap is neither at the position that is closest to the second inner pipe 8 nor at the position that is closest to the encasement pipe 4. The polyurethane foam 10 is adhered to the encasement pipe 4, the VIP 2, and the second inner pipe 8.

Figure 3B is a perspective view of an insulated pipe 1 according to an exemplary embodiment of the present invention. The insulated pipe 1 comprises an encasement pipe 4 and a first inner pipe 6 arranged inside the encasement pipe 4. The first inner pipe 6 may for example be a supply pipe in a district heating system. The insulated pipe 1 further comprises a VIP 2 comprising a vacuumized porous core material (3, shown in Figure 4) and a multi-layer envelope (200, shown in Figure 4) encasing said porous core material 3. The VIP 2 is arranged around the circumference of the first inner pipe 6, and the two ends of the VIP 2 overlap. Between the VIP 2 and the encasement pipe 4, a polyurethane foam 10 is provided. The VIP 2 is provided intermittently along an axial extension of the first inner pipe 6, i.e. the first inner pipe 6 alternates between being insulated by a combination of a VIP 2 and polyurethane foam 10, and being insulated by polyurethane foam 10. The polyurethane foam 10 is adhered to the encasement pipe 4, the VIP 2, and the portions of the first inner pipe 6 that are not provided with a VIP 2. The VIP 2 and the first inner pipe 6 are not rigidly connected to each other. This is in order to prevent the multi-layer envelope 200 of the VIP 2 from tearing when the first inner pipe 6 tries to expand longitudinally due to an increased temperature of the fluid transported therein. If the VIP 2 were to be rigidly connected to both the encasement pipe (via the polyurethane foam 10) and the first inner pipe 6, tearing of the multi-layer envelope 200 might occur as the first inner pipe 6 expands longitudinally. The vacuum tight seal would then be broken and fluid could permeate into said previously vacuumized porous core material 3.

Figure 4 is a cross-sectional view of a portion of an insulated pipe 1 according to one exemplary embodiment of the present invention. The cross-section is taken along a geometric plane that is parallel with the longitudinal axis of the first inner pipe 6, and which intersects the first inner pipe 6, the VIP 2, the polyurethane foam 10, and the encasement pipe 4. The insulated pipe 1 comprises an encasement pipe 4 that is located between the external environment and the rest of the insulated pipe 1. Inside the encasement pipe 4, there is provided a polyurethane foam 10 that act as one layer of insulation in the insulated pipe 1. The inner surface 12 of the encasement pipe 4 has undergone corona treatment, thus altering its surface properties such that the polyurethane foam 10 may more easily be attached thereto. The polyurethane foam 10 is adhered to the inner surface 12 of the encasement pipe 4. Inside the polyurethane foam 10, there is provided a VIP 2. The VIP 2 is adhered to the polyurethane foam 10, and arranged against the first inner pipe 6 which is provided inside of the VIP 2. The VIP 2 comprises a multi-layer envelope 200 and a porous core material 3. The VIP comprises an outward-facing side 14 and an inward-facing side 16, wherein the outward-facing 14 side faces the polyurethane foam 10 and the inward-facing side 16 faces the opposite direction. The multi-layer envelope 200 covers the porous core material 3 on both its sides and prevents fluids from permeating into said porous core material 3. The first inner pipe 6 is arranged to transport a fluid 13 that may have a higher temperature than the external environment, thus requiring the first inner pipe 6 to be insulated to decrease heat losses therefrom.

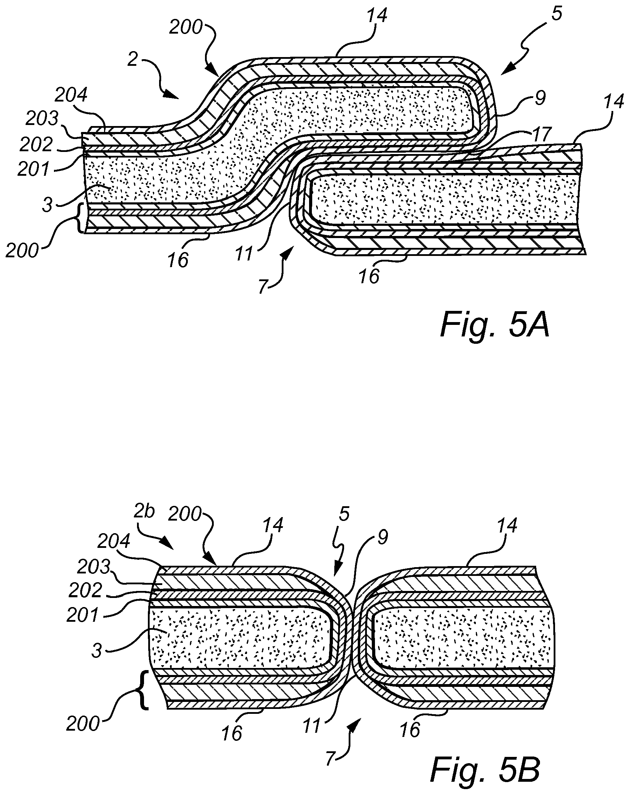

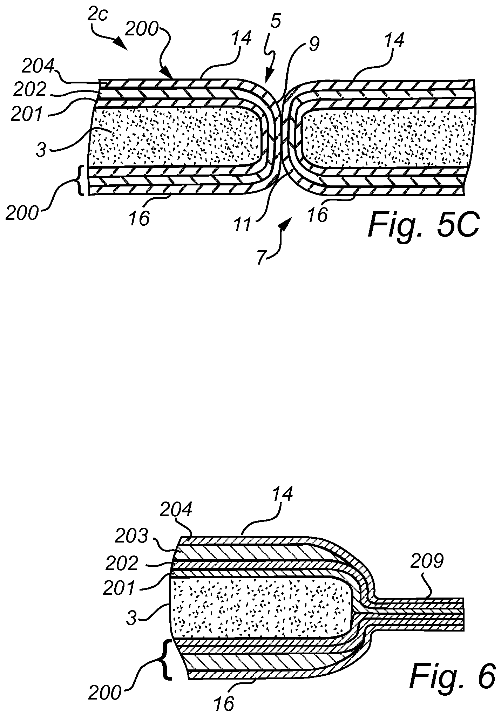

Figure 5A is a cross-sectional view of a portion of the VIP 2 seen in Figure 3A. Like the VIP 2' of Figures 1 and 2, the VIP 2 of Figure 5A comprises a porous core material 3 and a multi-layer envelope 200 encasing said porous core material 3 in a vacuum tight manner. The multi-layer envelope 200 is sealed around the porous core material 3 by means of a welded seam (209 shown in Figure 6) and the porous core material 3 have been vacuumized. The VIP 2 comprises an outward-facing side 14 and an inward-facing side 16 and, like the VIP 2' in Figure 1, further comprises side faces 9, 11. The VIP 2 comprises four side faces, but only the two side faces 9, 11 are seen in Figure 5A. The multi-layer envelope 200 consists of four layers of material 201, 202, 203, 204 arranged in a sandwich structure. The innermost layer 201 is a polymer layer, the second layer 202 is an aluminized polymer layer, the third layer is an aluminum foil 203, and the fourth layer 204 is a thermoplastic polymer layer. The VIP 2 is arranged so that its two ends 5, 7 overlap. The thermal conductivity of the vacuumized porous core material 3 is very low, and little heat is therefore transferred by means of conduction through this layer.

The aluminum foil 203 does not cover the entire circumference of the porous core material 3. The aluminum foil 203 is arranged so that it does not cover the side faces 9, 11 of the VIP 2, nor the overlapping portions 17 of the VIP 2, the overlapping portions 17 being the portion of the VIP 2 where there is overlap of the two ends 5, 7 of the VIP 2. At the portions of the VIP 2 that is not covered by the aluminum foil 203, there is only three layers 201, 202, 204 present. The layers 201, 202, 203, 204 are adhered to each other using a respective layer of adhesive (not shown). The thickness of the aluminum foil layer 203 is about 5 µm and the thickness of the aluminized polymer layer 202 is about 0,1 µm. Thus, the amount of heat transferred from one side of the VIP 2 to the other side of the VIP 2 by means of thermal conduction through the multi-layered envelope 200 is decreased due to the low thickness and resulting low thermal conductivity of the aluminized polymer layer 202, as compared to the aluminum foil 203. This is achieved without significantly decreasing the thermal stability of the VIP 2, as the use of an aluminized polymer layer 202 has proven to provide sufficient thermal stability of the VIP 2 when used in an environment of polyurethane foam 10.

Figure 5B is a cross-sectional view of a VIP 2b according to an exemplary embodiment of the present invention, showing two ends of a VIP 2b arranged in another configuration than in Figure 5A. Instead of having the two ends 5, 7 of the VIP 2b overlap, the VIP 2b is arranged so that its two side faces 9, 11 are in contact with each other. Thus, there is no overlap between the two ends 5, 7 of the VIP 2b. Here, multi-layered envelope 200 of the VIP 2b has an aluminum foil layer that extends around the entire circumference of the VIP 2b except its side faces 9, 11. Thus, the amount of heat transferred from one side of the VIP 2b to the other side of the VIP 2b by means of thermal conduction through the multi-layered envelope 200 is decreased due to the low thickness and resulting low thermal conductivity of the aluminized polymer layer 202 at the side faces 9, 11, as compared to the aluminum foil 203.

Figure 5C is a cross-sectional view of a VIP 2c according to another exemplary embodiment of the present invention. Here, the multi-layer envelope 200 of the VIP 2c does not comprise any aluminum foil 203. Instead, the multi-layer envelope 200 comprises a polymer layer 201, an aluminized polymer layer 202, and a thermoplastic polymer layer 204.

Figure 6 is a cross-sectional view showing a portion of the multi-layer envelope 200 that comprises a welded seam 209. The two innermost layers 201, 202 and the outermost layer 204, are all thermoplastic polymer layers. It should be noted that this figure, as well as the previous figures, are merely schematic. For example, the actual thickness of the porous core material 3 is several order of magnitude greater than thickness of the multi-layer envelope 200 and the length of the welded portion 209 is likewise many times greater than the thickness of the multi-layer envelope 200. The multi-layer envelope 200 further comprises an aluminum foil 203 that does not cover the side face 9 of the VIP 2. The three layers 201, 202, 204 that cover the side face 9 have been welded together by means of ultrasonic welding to form a welded seam 209. The welded seam 209 is located at the side face 9. However, the welded seam 209 may alternatively be located at any position around the circumference of the VIP 2. For example, the welded seam 209 may be located at the outward-facing side 14 or the inward-facing side 16 of the VIP 2, or anywhere therebetween. After the layers 201, 202, 204 have been welded together, the welded portion can be folded away (not shown) in a way that is compatible with the production method and the application area of the VIP 2. For example, the welded portion 209 may be folded towards the outward-facing side 14, thus moving it as far away from the pipe that is to be insulated as possible. This enables two VIPs 2 to be arranged adjacent to each other, without having the welded portion 209 be in the way.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise. Furthermore, any reference signs in the claims should not be construed as limiting the scope.

## Claims

1. An insulated pipe (1) comprising:
an encasement pipe (4) and a first inner pipe (6) arranged inside said encasement pipe (4),
at least one vacuum insulation panel (2) comprising a porous core material (3) and a multi-layer envelope (200) encasing said porous core material (3),
wherein said multi-layer envelope (200) comprises at least one layer comprising a metal material,
wherein said at least one vacuum insulation panel (2) is arranged around the circumference of said first inner pipe (6),
wherein said at least one vacuum insulation panel (2) comprises an inward-facing side facing towards a longitudinal axis of said first inner pipe (6), an outward-facing side facing the opposite direction, and four side faces arranged between said inward-facing side and said outward-facing side, and
said insulated pipe (1) further comprising a polymer foam (10) filling the space between said vacuum insulation panel (2) and said encasement pipe (4),
wherein at least at the portion of said multi-layer envelope (200) located at said four side faces any layer comprising a metal material is at least one metallized polymer layer.

2. An insulated pipe (1) according to claim 1, wherein said at least one metallized polymer layer has a thickness of less than 2000 nm, or preferably less than 1500 nm, or most preferably smaller than 1000 nm, and/or greater than 10 nm, and/or preferably greater than 20 nm.

3. An insulated pipe (1) according to any one of the preceding claims, wherein said polymer foam is a polyurethane foam.

4. An insulated pipe (1) according to any one of the preceding claims, wherein any layer of the multi-layer envelope (200) comprising a polymer material is a layer comprising a thermoplastic polymer material.

5. An insulated pipe (1) according to claim 4, wherein said thermoplastic polymer material is a Nylon material.

6. An insulated pipe (1) according to any one of the preceding claims, wherein said at least one metallized polymer layer is made of a material belonging to a group comprising: metallized ethylene vinyl alcohol, metallized PET, metallized polypropylene, metallized nylon, and metallized polyethylene.

7. An insulated pipe (1) according to any one of the preceding claims, wherein said at least one vacuum insulation panel (2) is arranged around the circumference of said first inner pipe (6) so that two ends of said at least one vacuum insulation panel (2) overlap.

8. An insulated pipe (1) according to any one of the preceding claims, wherein said polymer foam is adhered to said encasement pipe (4).

9. An insulated pipe (1) according to any one of the preceding claims, further comprising a second inner pipe (8) arranged inside said encasement pipe (4).

10. An insulated pipe (1) according to claim 8, wherein said polymer foam (10) is adhered to said second inner pipe (8).

11. An insulated pipe (1) according to claim 8 when dependent on claim 6, wherein said at least one vacuum insulation panel (2) does not overlap at the circumferential position on said first inner pipe (6) which is located closest to said second inner pipe (8).

12. A method for insulating district heating pipes comprising the steps of:
- providing an encasement pipe (4) and a first inner pipe (6) arranged inside said encasement pipe (4),
- providing at least one vacuum insulation panel (2) comprising a porous core material (3) and a multi-layer envelope (200) encasing said porous core material (3), wherein said at least one vacuum insulation panel (2) comprises an inward-facing side arranged to face towards a longitudinal axis of said first inner pipe (6), an outward-facing side arranged to face the opposite direction, and four side faces arranged between said inward-facing side and said outward-facing side, wherein at least at the portion of said multi-layer envelope (200) located at said four side faces any layer comprising a metal material is at least one metallized polymer layer,
- arranging said at least one vacuum insulation panel (2) around the circumference of said first inner pipe (6),
- filling a space between said vacuum insulation panel (2) and said encasement pipe (4) with a polymer foam (10).

13. A method according to claim 12, wherein said at least one vacuum insulation panel (2) is arranged around the circumference of said first inner pipe (6) so that two ends of said at least one vacuum insulation panel (2) overlap.

14. A method according to any one of claims 12 - 13, further comprising the steps of:
- providing a second inner pipe (8) arranged inside said encasement pipe (4), and
- adhering said polymer foam (10) to said second inner pipe (8).

15. A method according to any one of claims 12 - 14, further comprising the step of:
- sealing said multi-layer envelope (200) around said porous core material (3) by means of ultrasonic welding.

## Patentansprüche

1. Isoliertes Rohr (1), umfassend:
ein Mantelrohr (4) und ein erstes Innenrohr (6), das innerhalb des Mantelrohrs (4) angeordnet ist,
mindestens ein Vakuumisolationspaneel (2), umfassend ein poröses Kernmaterial (3) und eine mehrschichtige Umhüllung (200), die das poröse Kernmaterial (3) umgibt,
wobei die mehrschichtige Umhüllung (200) mindestens eine Schicht, umfassend ein Metallmaterial, umfasst,
wobei das mindestens eine Vakuumisolationspaneel (2) um den Umfang des ersten Innenrohrs (6) angeordnet ist,
wobei das mindestens eine Vakuumisolationspaneel (2) eine nach innen gerichtete Seite, die zu einer Längsachse des ersten Innenrohrs (6) zeigt, eine nach außen gerichtete Seite, die in die entgegengesetzte Richtung zeigt, und vier Seitenflächen, die zwischen der nach innen gerichteten Seite und der nach außen gerichteten Seite angeordnet sind, umfasst, und
wobei das isolierte Rohr (1) weiterhin einen Polymerschaum (10) umfasst, der den Raum zwischen dem Vakuumisolationspaneel (2) und dem Mantelrohr (4) füllt,
wobei mindestens in dem Abschnitt der mehrschichtigen Umhüllung (200), der sich an den vier Seitenflächen befindet, jede Schicht, die ein Metallmaterial umfasst, mindestens eine metallisierte Polymerschicht ist.

2. Isoliertes Rohr (1) nach Anspruch 1, wobei die mindestens eine metallisierte Polymerschicht eine Dicke von weniger als 2000 nm, oder vorzugsweise weniger als 1500 nm, oder besonders bevorzugt weniger als 1000 nm, und/oder mehr als 10 nm, und/oder vorzugsweise mehr als 20 nm aufweist.

3. Isoliertes Rohr (1) nach einem der vorhergehenden Ansprüche, wobei der Polymerschaum ein Polyurethanschaum ist.

4. Isoliertes Rohr (1) nach einem der vorhergehenden Ansprüche, wobei jede Schicht der mehrschichtigen Umhüllung (200), umfassend ein Polymermaterial, eine Schicht, umfassend ein thermoplastisches Polymermaterial ist.

5. Isoliertes Rohr (1) nach Anspruch 4, wobei das thermoplastische Polymermaterial ein Nylonmaterial ist.

6. Isoliertes Rohr (1) nach einem der vorhergehenden Ansprüche, wobei die mindestens eine metallisierte Polymerschicht aus einem Material besteht, das zu der Gruppe gehört, die Folgendes umfasst: metallisierter Ehtylenvinylalkohol, metallisiertes PET, metallisiertes Polypropylen, metallisiertes Nylon und metallisiertes Polyethylen.

7. Isoliertes Rohr (1) nach einem der vorhergehenden Ansprüche, wobei das mindestens eine Vakuumisolationspaneel (2) um den Umfang des ersten Innenrohrs (6) angeordnet ist, sodass die zwei Enden des mindestens einen Vakuumisolationspaneels (2) überlappen.

8. Isoliertes Rohr (1) nach einem der vorhergehenden Ansprüche, wobei der Polymerschaum an dem Mantelrohr (4) haftet.

9. Isoliertes Rohr (1) nach einem der vorhergehenden Ansprüche, weiterhin umfassend ein zweites Innenrohr (8), das innerhalb des Mantelrohrs (4) angeordnet ist.

10. Isoliertes Rohr (1) nach Anspruch 8, wobei der Polymerschaum (10) an dem zweiten Innenrohr (8) haftet.

11. Isoliertes Rohr (1) nach Anspruch 8, wenn abhängig von Anspruch 6, wobei das mindestens eine Vakuumisolationspaneel (2) an der Umfangsposition nicht mit dem ersten Innenrohr (6), das sich am nächsten an dem zweiten Innenrohr (8) befindet, überlappt.

12. Verfahren zum Isolieren von Fernwärmerohren, umfassend die Schritte des:
- Bereitstellens eines Mantelrohrs (4) und eines ersten Innenrohrs (6), das innerhalb des Mantelrohrs (4) angeordnet ist,
- Bereitstellens von mindestens einem Vakuumisolationspaneel (2), umfassend ein poröses Kernmaterial (3) und eine mehrschichtige Umhüllung (200), die das poröse Kernmaterial (3) umschließt, wobei das mindestens eine Vakuumisolationspaneel (2) eine nach innen gerichtete Seite, die zu einer Längsachse des ersten Innenrohrs (6) zeigend angeordnet ist, eine nach außen gerichtete Seite, die in die entgegengesetzte Richtung zeigend angeordnet ist, und vier Seitenflächen, die zwischen der nach innen gerichteten Seite und der nach außen gerichteten Seite angeordnet sind, umfasst, wobei mindestens in dem Abschnitt der mehrschichtigen Umhüllung (200), der sich an den vier Seitenflächen befindet, jede Schicht, die ein Metallmaterial umfasst, mindestens eine metallisierte Polymerschicht ist,
- Anordnens des mindestens einen Vakuumisolationspaneels (2) um den Umfang des ersten Innenrohrs (6),
- Füllens des Raums zwischen dem ersten Vakuumisolationspaneel (2) und dem Mantelrohr (4) mit einem Polymerschaum (10).

13. Verfahren nach Anspruch 12, wobei das mindestens eine Vakuumisolationspaneel (2) um den Umfang des ersten Innenrohrs (6) angeordnet ist, sodass die zwei Enden des mindestens einen Vakuumisolationspaneels (2) überlappen.

14. Verfahren nach einem der Ansprüche 12 bis 13, weiterhin umfassend die Schritte des:
- Bereitstellens eines zweiten Innenrohrs (8), das innerhalb des Mantelrohrs (4) angeordnet ist, und
- Anhaftens des Polymerschaums (10) an das zweite Innenrohr (8).

15. Verfahren nach einem der Ansprüche 12 bis 14, weiterhin umfassend den Schritt des:
- Versiegelns der mehrschichtigen Umhüllung (200) um das poröse Kernmaterial (3) mittels Ultraschallschweißen.

## Revendications

1. Tuyau isolé (1) comprenant :
un tuyau d'enceinte (4) et un premier tuyau intérieur (6) agencé à l'intérieur dudit tuyau d'enceinte (4),
au moins un panneau d'isolation sous vide (2) comprenant un matériau à âme poreuse (3) et une enveloppe multi-couches (200) entourant ledit matériau à âme poreuse (3),
dans lequel ladite enveloppe multi-couches (200) comprend au moins une couche comprenant un matériau métallique,
dans lequel ledit au moins un panneau d'isolation sous vide (2) est agencé autour de la circonférence dudit premier tuyau intérieur (6),
dans lequel ledit au moins un panneau d'isolation sous vide (2) comprend un côté tourné vers l'intérieur faisant face à un axe longitudinal dudit premier tuyau intérieur (6), un côté tourné vers l'extérieur faisant face à la direction opposée, et quatre faces latérales agencées entre ledit côté tourné vers l'intérieur et ledit côté tourné vers l'extérieur, et
ledit tuyau isolé (1) comprenant en outre une mousse polymère (10) remplissant l'espace entre ledit panneau d'isolation sous vide (2) et ledit tuyau d'enceinte (4),
dans lequel au moins sur la partie de ladite enveloppe multi-couches (200) située sur lesdites quatre faces latérales, toute couche comprenant un matériau métallique est au moins une couche polymère métallisée.

2. Tuyau isolé (1) selon la revendication 1, dans lequel ladite au moins une couche polymère métallisée a une épaisseur inférieure à 2000 nm ou de préférence inférieure à 1500 nm, ou de manière la plus préférée inférieure à 1000 nm et/ou supérieure à 10 nm, et/ou de préférence supérieure à 20 nm.

3. Tuyau isolé (1) selon l'une quelconque des revendications précédentes, dans lequel ladite couche polymère est une mousse polyuréthane.

4. Tuyau isolé (1) selon l'une quelconque des revendications précédentes, dans lequel toute couche de l'enveloppe multi-couches (200) comprenant un matériau polymère est une couche comprenant un matériau polymère thermoplastique.

5. Tuyau isolé (1) selon la revendication 4, dans lequel ledit matériau polymère thermoplastique est un matériau de nylon.

6. Tuyau isolé (1) selon l'une quelconque des revendications précédentes, dans lequel ladite au moins une couche polymère métallisée est faite d'un matériau appartenant à un groupe comprenant : l'éthylène alcool de vinyle métallisé, le PET métallisé, le polypropylène métallisé, le nylon métallisé et le polyéthylène métallisé.

7. Tuyau isolé (1) selon l'une quelconque des revendications précédentes, dans lequel ledit au moins un panneau d'isolation sous vide (2) est agencé autour de la circonférence dudit premier tuyau intérieur (6) de façon à ce que deux extrémités dudit au moins un panneau d'isolation sous vide (2) se chevauchent.

8. Tuyau isolé (1) selon l'une quelconque des revendications précédentes, dans lequel ladite couche polymère est collée audit tuyau d'enceinte (4).

9. Tuyau isolé (1) selon l'une quelconque des revendications précédentes, comprenant en outre un second tuyau intérieur (8) agencé à l'intérieur dudit tuyau d'enceinte (4).

10. Tuyau isolé (1) selon la revendication 8, dans lequel ladite mousse polymère (10) est collée audit second tuyau intérieur (8).

11. Tuyau isolé (1) selon la revendication 8 lorsque dépendante de la revendication 6, dans lequel ledit au moins un panneau d'isolation sous vide (2) ne se chevauche pas à la position circonférentielle sur ledit premier tuyau intérieur (6) qui est situé le plus près dudit second tuyau intérieur (8).

12. Procédé d'isolation de tuyaux de chauffage urbain comprenant les étapes de :
- fournir un tuyau d'enceinte (4) et un premier tuyau intérieur (6) agencé à l'intérieur dudit tuyau d'enceinte (4),
- fournir au moins un panneau d'isolation sous vide (2) comprenant un matériau à âme poreuse (3) et une enveloppe multi-couches (200) entourant ledit matériau à âme poreuse (3), dans lequel ledit au moins un panneau d'isolation sous vide (2) comprend un côté tourné vers l'intérieur faisant face à un axe longitudinal dudit premier tuyau intérieur (6), un côté tourné vers l'extérieur agencé pour faire face à la direction opposée, et quatre faces latérales agencées entre ledit côté tourné vers l'intérieur et ledit côté tourné vers l'extérieur, dans lequel au moins sur la partie de ladite enveloppe multi-couches (200) située sur lesdites quatre faces latérales, toute couche comprenant un matériau métallique est au moins une couche polymère métallisée,
- agencer ledit au moins un panneau d'isolation sous vide (2) autour de la circonférence dudit premier tuyau intérieur (6),
- remplir un espace entre ledit panneau d'isolation sous vide (2) et ledit tuyau d'enceinte (4) avec une mousse polymère (10).

13. Procédé selon la revendication 12, dans lequel ledit au moins un panneau d'isolation sous vide (2) est agencé autour de la circonférence dudit premier tuyau intérieur (6) de façon à ce que deux extrémités dudit au moins un panneau d'isolation sous vide (2) se chevauchent.

14. Procédé selon l'une quelconque des revendications 12 - 13, comprenant en outre les étapes de :
- fournir un second tuyau intérieur (8) agencé à l'intérieur dudit tuyau d'enceinte (4), et
- coller ladite couche polymère (10) audit second tuyau intérieur (8).

15. Procédé selon l'une quelconque des revendications 12 - 14, comprenant en outre l'étape de :
- étanchéifier ladite enveloppe multi-couches (200) autour dudit matériau à âme poreuse (3) par soudage aux ultrasons.
